# FASCICULE DE BREVET EUROPEEN

(11) **EP 0 409 317 B1**
(45) Date de publication et mention de la délivrance du brevet: **27.10.1993**
(21) Numéro de dépôt: 90201868.8
(22) Date de dépôt: 11.07.1990
(51) Int. Cl.: F16C 13/00

(54) **Cylindre de calandrage à compensation de flexion**
Kalanderwalze mit Durchbiegungskompensierung
Calender roll with deflection compensation

(30) Priorité: 17.07.1989 BE 8900777
(43) Date de publication de la demande: 23.01.1991
(73) Titulaire: SOLVAY (Société Anonyme), B-1050 Bruxelles (BE)
(72) Inventeur: Branchadell, José, B-1970 Wezembeek-Oppem (BE)
(74) Mandataire: Dufrasne, Eugène

(56) Documents cités:
- DE-A- 2 315 669
- DE-A- 2 507 677
- DE-B- 2 632 452
- FR-A- 2 129 646
- GB-A- 917 181
- GB-A- 1 074 936
- GB-A- 2 145 194
- US-A- 2 890 026

## Description

La présente invention concerne un cylindre de calandrage à compensation de flexion qui convient particulièrement pour le calandrage à chaud des matières plastiques.

Des cylindres de calandrage à compensation de flexion sont déjà connus par les brevets allemands DE-A-14 11 327, DE-A-14 61 066, DE-A-23 25 721 et DE-A-30 03 395 , par la demande de brevet allemand DE-A-22 30 139 et par la demande de brevet britannique GB-A-21 45 194. De tels cylindres sont généralement constitués par une enveloppe métallique cylindrique qui peut être déformée de façon contrôlée sous l'action d'une pression hydraulique. De tels cylindres de calandrage sont couramment utilisés de longue date dans l'industrie du textile et du papier. De tels cylindres peuvent toutefois également présenter un grand intérêt dans le cadre du calandrage des matières plastiques pour autant que ceux-ci puissent être équipés de moyens de chauffage adéquats.

Ainsi, dans la demande de brevet britannique GB-A-21 45 194, on divulgue un cylindre de calandrage à compensation de flexion qui peut être exploité pour la mise en oeuvre des matières plastiques. Ce cylindre comporte une enveloppe extérieure métallique d'épaisseur relativement élevée qui est équipée de canaux longitudinaux pour la circulation d'un fluide caloporteur, cette enveloppe présentant un logement interne dans lequel est introduit un noyau fixe qui délimite avec l'enveloppe une chambre qui est divisée longitudinalement par un joint adéquat. Des conduites axiales disposées du côté apparent du noyau permettent d'introduire un fluide hydraulique sous pression dans la chambre divisée qui provoque une déformation contrôlée de l'enveloppe. Du fait de la présence de ces conduites axiales, l'entraînement en rotation de l'enveloppe doit être assurée par un cardan qui agit du côté opposé du cylindre. En conséquence, le fluide caloporteur devant circuler dans les canaux de l'enveloppe doit être introduit et retiré par l'intermédiaire d'anneaux d'alimentation disposés autour du cylindre ce qui impose à ceux-ci un diamètre relativement important. Compte tenu de la pression développée par le fluide caloporteur lorsque celui-ci est de l'eau, il est, dès lors, difficile d'assurer une étanchéité efficace, dans le temps, au niveau des anneaux d'alimentation. Il en résulte que le recours à de l'eau comme fluide caloporteur, ainsi qu'il est de coutume dans les installations de calandrage peut se révéler très dangereux avec ce type de cylindre et qu'en général lorsqu'on utilise un tel cylindre de calandrage on préfère généralement utiliser un fluide caloporteur constitué par une huile thermique afin de réduire les risques d'accidents.

Il en résulte donc que, lors de l'utilisation d'un tel cylindre dans une installation de calandrage de matières plastiques, on doit recourir à un fluide caloporteur particulier et prévoir une alimentation ou une extraction de ce fluide du côté de l'entraînement de ce cylindre, ce qui est contraire à la pratique usuelle. En effet, dans les installations de calandrage des matières plastiques, les conduites de fluide caloporteur sont généralement situées du côté opposé aux cardans d'entraînement des cylindres de calandrage.

Il a maintenant été réalisé un cylindre de calandrage à compensation de flexion du même type que ceux évoqués ci-avant qui permet de remédier aux inconvénients sus-mentionnés et qui permet en outre le recours, sans danger, à de l'eau en tant que fluide caloporteur.

La présente invention concerne dès lors un cylindre de calandrage à compensation de flexion comprenant
- une enveloppe externe métallique cylindrique équipée d'une pluralité de canaux longitudinaux de chauffage disposés parallèlement dans sa paroi
- un logement cylindrique interne disposé dans l'axe de l'enveloppe externe
- des moyens tels que des chambres pour déformer l'enveloppe externe de façon contrôlée sous l'effet d'une pression hydraulique disposés dans le logement cylindrique interne
- des moyens, tels que des conduites coaxiales disposées axialement par rapport au logement cylindrique interne, pour introduire un fluide hydraulique dans le logement cylindrique interne et des moyens, tels que des conduites et un distributeur rotatif disposé axialement par rapport au logement cylindrique interne, pour introduire un fluide caloporteur dans les canaux longitudinaux de chauffage et pour extraire ce fluide de ces canaux qui se caractérise en ce que:
- un engrenage d'entraînement solidaire de l'enveloppe externe est prévu et disposé sur une extrémité de cette enveloppe externe pour assurer sa mise en rotation
- les moyens pour introduire le fluide hydraulique sont situés du côté de l'enveloppe externe comportant l'engrenage d'entraînement
- les moyens pour introduire et extraire le fluide caloporteur comportent, en outre, des conduites coaxiales et saillantes sur l'axe de l'enveloppe métallique cylindrique longitudinal du cylindre, le distributeur rotatif étant disposé dans la partie saillante des conduites et axialement par rapport au logement cylindrique interne, ces divers moyens étant situés du côté de l'enveloppe externe opposé à celui comportant l'engrenage d'entraînement et
- l'entraînement en rotation de l'engrenage d'entraînement est assuré par un second engrenage décalé latéralement par rapport à celui-ci et raccordé directement au cardan d'entraînement.

Dans le cylindre de calandrage conforme à l'invention il apparaît dès lors que les conduites d'amenée et de reprise du fluide caloporteur sont situées, dans l'installation de calandrage, du côté opposé à celui comprenant le dispositif d'entraînement des cylindres de calandrage ainsi qu'il est de pratique usuelle. Il en résulte donc que l'installation d'un tel cylindre sur une installation de calandrage déjà existante peut être réalisé avec un minimum de modifications. En outre, dans le cylindre de calandrage conforme à l'invention le distributeur rotatif pour le fluide caloporteur est situé dans l'axe du logement cylindrique interne et, en conséquence, son diamètre peut être réduit. Il en résulte que les pressions exercées sur ce dernier par le fluide caloporteur sont réduites et que les problèmes d'étanchéité du distributeur peuvent être résolus très aisément. En conséquence le fluide caloporteur mis en oeuvre peut, sans danger, être de l'eau ou de la vapeur d'eau sous pression ainsi qu'il est de pratique usuelle dans les installations de calandrage des matières plastiques. En général, on préfère mettre en oeuvre un fluide caloporteur maintenu à une température pouvant atteindre 230°C, sa pression pouvant dépasser 35 bars. Il est toutefois bien entendu que le cylindre de calandrage conforme à l'invention peut être conditionné thermiquement par circulation d'un fluide calorifique quelconque.

Dans le cylindre conforme à l'invention les moyens pour déformer l'enveloppe externe peuvent être quelconques. Ainsi, on peut recourir indifféremment à des poussoirs hydrauliques ou à des chambres cloisonnées prévus dans le logement cylindrique interne comme décrit dans les brevets sus-mentionnés qui sont incorporés par référence dans la description. En général, on préfère toutefois utiliser des cylindres faisant appel à deux chambres cloisonnées comme divulgués dans la demande de brevet britannique 21 45 194.

Compte tenu du fait que, dans le cylindre conforme à l'invention, l'introduction et l'extraction du fluide caloporteur sont effectuées d'un même côté du cylindre, les canaux longitudinaux de chauffage peuvent être raccordés en série par paires ou par groupes de quatre.

Le cylindre de calandrage conforme à la présente invention peut être exploité sur toute installation de calandrage. En particulier un tel cylindre convient particulièrement comme cylindre 3 , 5', 3'' et/ou 4'' dans les installations de calandrage faisant l'objet de la demande de brevet français N° 88/15498 déposée le 24 novembre 1988.

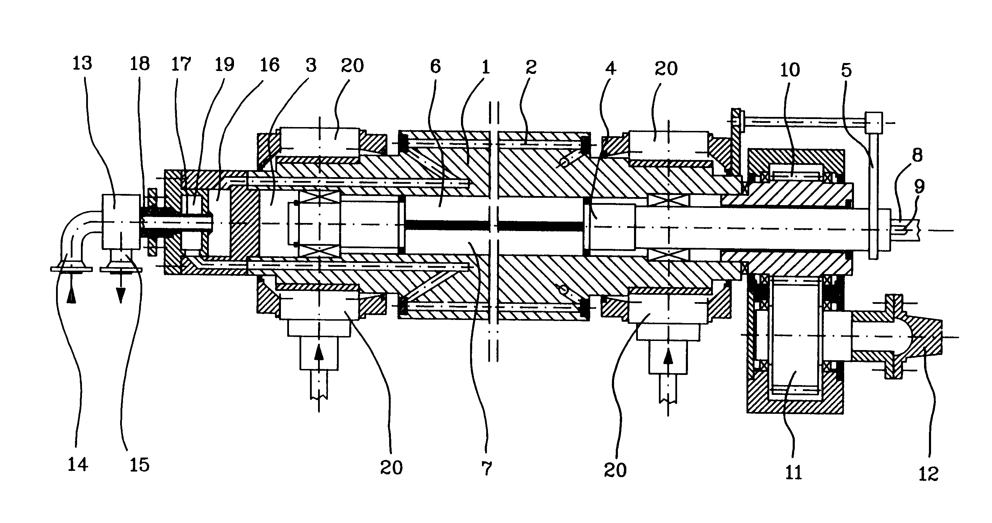

Le cylindre de calandrage conforme à l'invention est, par ailleurs, explicité plus en détail dans la description qui va suivre d'un mode particulier de réalisation. Dans cette description , on se réfèrera à la figure du dessin unique annexé qui représente en coupe un tel cylindre

Ainsi qu'il apparaît sur cette figure, le cylindre de calandrage conforme à l'invention comporte une enveloppe externe métallique cylindrique (1) qui est équipée d'une pluralité de canaux longitudinaux de chauffage (2) disposés parallèlement dans sa paroi et à proximité de sa surface externe, ces canaux étant raccordés en série par paire. L'enveloppe externe (1) comporte un logement interne axial (3) dans lequel est disposé un noyau fixe (4) maintenu par un bras de réaction (5) solidaire du bâti de l'installation de calandrage. Le noyau (4) délimite dans le logement interne deux chambres inférieure et supérieure (6) et (7) par l'intermédiaire d'un joint longitudinal approprié (non représenté). Les chambres (6) et (7) sont raccordées à une source de fluide hydraulique sous pression par l'intermédiaire des canalisations coaxiales ( 8) et (9) disposées selon l'axe longitudinal du logement interne (3).

En intervenant sur la pression du fluide hydraulique dans les chambres (6) et (7), il est donc possible de déformer de façon contrôlée l'enveloppe (1).

Sur l'extrémité de l'enveloppe (1) et du côté du maintien du noyau fixe (4) est monté un engrenage d'entraînement (10) qui peut s'engrener avec un second engrenage décalé latéralement (11), ce second engrenage étant raccordé directement au cardan (12) d'entraînement du cylindre de calandrage.

Du fait du décalage axial de l'entraînement de l'enveloppe (1) ainsi réalisé, l'extrémité du cylindre de calandrage, du côté de son entraînement, est libérée et peut être exploitée pour l'introduction du fluide hydraulique utilisé pour assurer la déformation contrôlée de l'enveloppe externe (1).

L'extrémité opposée de l'enveloppe externe (1), est équipée d'un distributeur rotatif (13) qui est situé sur l'axe longitudinal de l'enveloppe externe (1) et partant sur l'axe longitudinal du cylindre de calandrage. Ce distributeur rotatif (13) assure l'introduction et la reprise du fluide caloporteur utilisé pour conditionner thermiquement l'enveloppe externe (1) via ses canaux longitudinaux de chauffage (2), ce fluide étant amené par la conduite (14) et évacué par la conduite (15). Le distributeur rotatif (13) alimente, par la conduite (17), la chambre (16) dans laquelle débouchent les départs des canaux longitudinaux de chauffage (2) et assure ,par la conduite coaxiale (18), l'évacuation de la chambre (19) dans laquelle débouchent les retours des canaux longitudinaux de chauffage (2).

Comme le distributeur rotatif (13) est situé sur l'axe du cylindre de calandrage et au-delà de son extrémité, son diamètre peut être réduit et, dès lors, son étanchéité, même vis-à-vis de fluides sous forte pression, peut être aisément assurée.

En exploitation, le cylindre de calandrage qui vient d'être décrit est évidemment soutenu par des paliers lisses ou à roulement (20) disposés de part et d'autre de la zone utile de l'enveloppe externe (1). Il apparaît, par ailleurs, que dans une installation de calandrage équipée d'un ou de plusieurs cylindres de calandrage selon l'invention, l'alimentation en fluide caloporteur reste assurée du côté opposé aux entraînements, ainsi qu'il est de pratique usuelle.

## Revendications

1. Cylindre de calandrage à compensation de flexion comprenant
- une enveloppe externe métallique cylindrique (1) équipée d'une pluralité de canaux longitudinaux de chauffage (2) disposés parallèlement dans sa paroi
- un logement cylindrique interne (3) disposé dans l'axe de l'enveloppe externe (1)
- des moyens, tels que des chambres (6, 7) pour déformer l'enveloppe externe (1) de façon contrôlée sous l'effet d'une pression hydraulique disposés dans le logement cylindrique interne (3)
- des moyens, tels que des conduites coaxiales (8, 9) disposées axialement par rapport au logement cylindrique interne (3), pour introduire un fluide hydraulique dans le logement cylindrique interne (3) et des moyens, tels que des conduites (14, 15) et un distributeur rotatif (13) disposé axialement par rapport au logement cylindrique interne, pour introduire un fluide caloporteur dans les canaux longitudinaux de chauffage (2) et pour extraire ce fluide de ces canaux (2) caractérisé en ce que :
- un engrenage d'entraînement (10) solidaire de l'enveloppe externe (1) est prévu et disposé sur une extrémité de cette enveloppe externe (1) pour assurer sa mise en rotation
- les moyens (8, 9) pour introduire le fluide hydraulique sont situés du côté de l'enveloppe externe (1) comportant l'engrenage d'entraînement (10)
- les moyens pour introduire et extraire le fluide caloporteur comportent, en outre, des conduites (17, 18) coaxiales et saillantes sur l'axe de l'enveloppe métallique cylindrique (1) longitudinal du cylindre, le distributeur rotatif (13) étant disposé dans la partie saillante des conduites (17, 18) et axialement par rapport au logement cylindrique interne (3), ces divers moyens étant situés du côté de l'enveloppe externe (1) opposé à celui comportant l'engrenage d'entraînement (10) et
- l'entraînement en rotation de l'engrenage d'entraînement (10) est assuré par un second engrenage (11) décalé latéralement par rapport à celui-ci et raccordé directement au cardan d'entraî- nement.

2. Cylindre de calandrage selon la revendication 1 caractérisé en ce que les canaux longitudinaux de chauffage (2) sont raccordés en série par paire.

3. Cylindre de calandrage selon la revendication 1 caractérisé en ce que les canaux longitudinaux de chauffage (2) sont raccordés en série par groupe de quatre.

## Patentansprüche

1. Kalanderwalze mit Durchbiegekompensierung, umfassend
- einen zylindrischen äußeren Metallmantel (1), der mit einer Mehrzahl von in seiner Wand parallel zueinander angeordneten Heizungslängskanälen versehen ist
- eine auf der Achse des äußeren Mantels (1) angeordnete innere zylindrische Aufnahme (3)
- in der inneren zylindrischen Aufnahme (3) angeordnete Mittel wie Kammern (6, 7), um den äußeren Mantel (1) unter der Wirkung eines Hydraulikdrucks gesteuert zu verformen
- Mittel, wie bezüglich der inneren zylindrischen Aufnahme (3) axial angeordnete koaxiale Leitungen, um eine Hydraulikflüssigkeit in die innere zylindrische Aufnahme (3) zuzuführen, und Mittel, wie Leitungen (14, 15) und einen bezüglich der inneren zylindrischen Aufnahme axial angeordneten Drehverteiler (13), um ein Wärmeübertragungsfluid in die Heizungslängskanäle (2) zuzuführen und um dieses Fluid aus diesen Kanälen (2) abzuziehen,
- eine mit dem äußeren Mantel zusammenhängende Antriebsverzahnung vorgesehen ist und auf einem Ende dieses äußeren Mantels (1) angeordnet ist, um sein Indrehungversetzen sicherzustellen dadurch gekennzeichnet, dass :
- die Mittel (8, 9) zum Zuführen der Hydraulikflüssigkeit auf der Seite des äußeren Mantels (1) angeordnet sind, welche die Antriebsverzahnung (10) aufweist
- die Mittel zum Zuführen und Abziehen des Wärmeübertragungsfluids außerdem koaxiale und auf der Achse des zylindrischen Metallmantels (1) in Längsrichtung der Walze überstehende Leitungen (17, 18) aufweisen, wobei der Drehverteiler (13) im überstehenden Teil der Leitungen (17, 18) und bezüglich der inneren zylindrischen Aufnahme (3) axial angeordnet ist, wobei diese verschiedenen Mittel auf der Seite des äußeren Mantels (1) angeordnet sind, die derjenigen, welche die Antriebsverzahnung (10) aufweist, entgegengesetzt ist, und
- der Drehantrieb der Antriebsverzahnung (10) durch eine zweite Verzahnung (11) sichergestellt wird, die in Bezug zu dieser seitlich versetzt und unmittelbar mit dem Antriebskardan verbunden ist.

2. Kalanderwalze nach Anspruch 1, dadurch gekennzeichnet, daß die Heizungslängskanäle (2) paarweise in Reihe geschaltet sind.

3. Kalanderwalze nach Anspruch 1, dadurch gekennzeichnet, daß die Heizungslängskanäle (2) in Vierergruppen in Reihe geschaltet sind.

## Claims

1. Calendering roller with bending compensation comprising
- a cylindrical metal outer casing (1) equipped with a plurality of longitudinal heating passages (2) arranged in parallel in its wall
- an inner cylindrical housing (3) arranged on the axis of the outer casing (1)
- means, such as chambers (6, 7) for deforming the outer casing (1) in a controlled fashion under the effect of a hydraulic pressure and located in the inner cylindrical housing (3)
- means, such as coaxial ducts (8, 9) arranged axially with respect to the inner cylindrical housing (3), for introducing a hydraulic fluid into the inner cylindrical housing (3) and means, such as ducts (14, 15) and a rotary distributor (13) located axially with respect to the inner cylindrical housing, for introducing a heat-transfer fluid into the longitudinal heating passages (2) and for extracting this fluid from these passages (2), characterised in that:
- a drive gear (10) secured to the outer casing (1) is provided and arranged on one end of this outer casing (1) in order to rotate it,
- the means (8, 9) for introducing the hydraulic fluid are located on the side of the outer casing (1) including the drive gear (10),
- the means for introducing and extracting the heat-transfer fluid furthermore include ducts (17, 18) which are coaxial and project on the axis of the longitudinal cylindrical metal casing (1) of the cylinder, the rotary distributor (13) being arranged in the projecting part of the ducts (17, 18) and axially with respect to the inner cylindrical housing (3), these various means being located on the side of the outer casing (1) opposite the one including the drive gear (10) and
- the rotational drive of the drive gear (10) is provided by a second gear (11) laterally offset with respect to the former and connected directly to the cardan drive joint.

2. Calendering roller according to Claim 1, characterised in that the longitudinal heating passages (2) are connected together in series in pairs.

3. Calendering roller according to Claim 1, characterised in that the longitudinal heating passages (2) are connected together in series in groups of four.
